# EUROPÄISCHE PATENTSCHRIFT

(11) **EP 3 007 883 B1**
(45) Veröffentlichungstag und Bekanntmachung des Hinweises auf die Patenterteilung: **15.08.2018**
(21) Anmeldenummer: 14722231.9
(22) Anmeldetag: 09.05.2014
(51) Int. Cl.: B29C 70/08, B29B 11/16, B32B 5/06, B29C 70/30

(54) **VERFAHREN UND VORRICHTUNG ZUM HERSTELLEN EINES FASERVERBUNDBAUTEILS SOWIE FASERVERBUNDBAUTEIL**
METHOD AND DEVICE FOR PRODUCING A FIBRE COMPOSITE COMPONENT AND FIBRE COMPOSITE COMPONENT
PROCÉDÉ ET DISPOSITIF PERMETTANT DE FABRIQUER UN ÉLÉMENT COMPOSITE RENFORCÉ PAR DES FIBRES, ET ÉLÉMENT COMPOSITE RENFORCÉ PAR DES FIBRES

(30) Priorität: 12.06.2013 DE 102013210934
(43) Veröffentlichungstag der Anmeldung: 20.04.2016
(73) Patentinhaber: Bayerische Motoren Werke Aktiengesellschaft, 80809 München (DE)
(72) Erfinder: WAGNER, Peter, 81377 München (DE); GREIM, Gerhard, 81371 Muenchen (DE)
(86) Internationale Anmeldenummer: PCT/EP2014/059513
(87) Internationale Veröffentlichungsnummer: WO 2014/198463

(56) Entgegenhaltungen:
- EP-A2- 0 426 317
- EP-A2- 2 246 180
- US-A- 5 248 551
- US-A1- 2003 017 053

## Beschreibung

Die vorliegende Erfindung betrifft ein Verfahren und eine Vorrichtung zur Herstellung eines Faserverbundbauteils sowie ein Faserverbundbauteil.

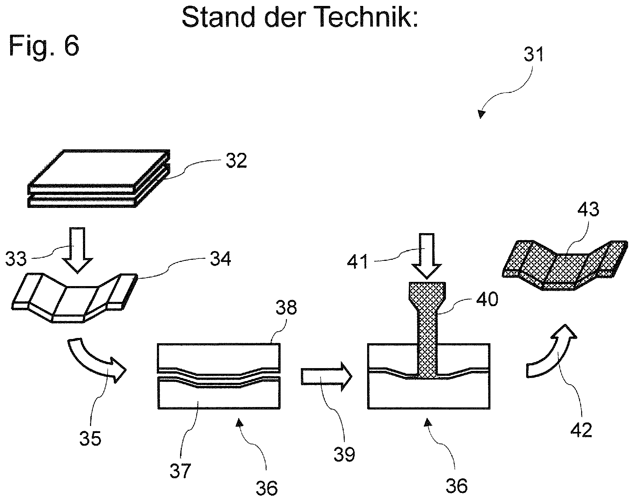

Es ist bekannt, Faserverbundbauteile aus zwei oder mehr Lagen aus unidirektionalen oder mehrdirektionalen Langfaseranordnungen, im weiteren Verlauf dieser Anmeldung als Langfaserlagen bezeichnet, herzustellen, wobei die Langfaserlagen kreuzweise oder mit beliebigem Winkelversatz angeordnet sind. Mit anderen Worten, mehrere Langfaserlagen, insbesondere unidirektionale (UD)-Lagen, werden mit unterschiedlicher Orientierung der Fasern aufeinander gestapelt (Stack), um eine Preform bzw. ein Prepreg vorzubereiten, welche/-s anschließende in Form gepresst, mit einer Matrix benetzt (z.B. duroplastische oder thermoplastische Harze) infiltriert und ausgehärtet wird. Ein beispielhaftes Verfahren zum Herstellen eines Faserverbundbauteils aus wenigstens zwei Langfaserlagen nach dem Stand der Technik ist in Fig. 6 schematisch dargestellt.

Gemäß der Darstellung in Fig. 6 wird in einer Laminierstation 31 zunächst ein Stapel von Langfaserlagen 32 mit jeweils definierter Faserorientierung vorbereitet. Die Langfaserlagen 32 werden beispielsweise aus Rovings (Fasersträngen aus quasiendlosen Einzelfilamenten) vorbereitet. Die Langfaserlagen 32 werden dann in einem Vorformprozess 33 zu einer Preform 34 geformt. In einem Einlegeschritt 35wird die Preform 34 in ein Werkzeug 36, welches ein Unterteil 37 und ein Oberteil 38 mit jeweiligen Formgebungsflächen, die der Form des herzustellenden Bauteils entsprechen, aufweist, eingelegt. Dabei wird die eingelegte Preform über die Werkzeugkontur positioniert. Wenn eine Positionierung über die Werkzeugkontur nicht möglich ist, werden beispielsweise federbelastete Positionierstifte (nicht näher dargestellt) am Werkzeug 36 eingesetzt. Dabei wird die Preform beispielsweise ausgestanzt und danach mit den Stanzlöchern über den Stiften positioniert. Die federbelasteten Stifte werden später beim Schließen des Werkzeugs vom Oberteil 38 in das Unterteil 37 gedrückt. Danach wird die Preform 34 in einem Pressprozess 39 in dem Werkzeug 36 gepresst. Dies geschieht beispielsweise durch einen sog. Index-Closing-Prozess. Dabei wird zunächst ein Spalt von ca. 0,3 mm eingestellt, d.h., die Kavität zwischen Unterteil 37 und Oberteil 38 bis auf ein Übermaß von ca. 0,3 mm geschlossen. Danach wird das Werkzeug mittels Entlüftungsbausteinen und einem Vakuum von etwa -0,8 bar evakuiert. Dadurch sollen Lufteinschlüsse verhindert und somit die Qualität des RTM-Bauteils maßgeblich beeinflusst werden. Die Entlüftungszeit variiert je nach Werkzeug-Größe und -Form. Dann wird über einen Injektor 34 ein Harzsystem 41 eingepresst, welches die Preform 34 tränkt und einen Verbund mit den Langfaserlagen 32 eingeht. Das Harz-System kann beispielsweise ein Zwei-Komponenten-Epoxidharz-(2K-EP)-System sein. Der Injektor weist beispielsweise einen Mischkopf auf, der am Werkzeug-Angusspunkt befestigt ist. Die Verdüsung der einzelnen Komponenten erfolgt bei ca. 110 bar im Mischkopf. Während der Injektion über eine Schusszeit von bis zu 60 s kann der Innendruck im Werkzeug auf über 80 bar ansteigen. Nach beenden der Injektion wird das Werkzeug 36 vollständig geschlossen, d.h., der Spalt von ca. 0,3 mm auf null reduziert. Durch diese sogenannte Spaltinjektion kann der Druck bei der Injektion verringert, die Bauteiloberfläche verbessert sowie Schwundmarken und Poren am fertigen RTM-Bauteil reduziert werden. Nach dem Schussende beginnt die Härtezeit zu laufen. Diese variiert je nach Harzsystem und Werkzeugtemperatur (ca. 100°C bei Basisharz, 125°C bei Potentialharz) und liegt im Schnitt bei 3 bis 6 Minuten. Die Temperatur wird durch Heizkreisläufe im Werkzeug und dazugehörige Temperier-Geräte gesteuert. Nach Ablauf der Härtezeit wird in einem Entformprozess 42 das fertige Bauteil 43 aus dem Werkzeug 36 entformt. D.h., das Werkzeug 36 öffnet sich automatisch und Auswerferstifte werden betätigt. Dadurch wird das fertig ausgehärtete Bauteil 43 aus dem Unterteil 37 ausgeworfen. Nach dem Entformen kann das Bauteil 43 entweder manuell oder automatisch entnommen werden. Das Werkzeug 36 wird anschließend mittels Druckluft gereinigt.

Der oben beschriebene Prozess wird beispielsweise als ein RTM-(Resin Transfer Molding - dt. Druckinjektions- oder Spritzpress-)-Verfahren bezeichnet. Bei diesem Verfahren können aufgrund der kurzen Aushärtezeit eines in dem Harzsystem verwendeten Klebers bestimmte Materialmerkmale, z. B. Poren oder dergleichen, entstehen. Diese können bei einem Einsatz des fertigen Bauteils 43 Spannungsspitzen ausbilden und Ausgangspunkte für Risse sein. Bildet sich ein Riss innerhalb eines Rovings, d. h., der Verstärkungsfaseranordnung, kann der Riss durch die Fasern gestoppt werden. In der Matrix jedoch kann sich ein Riss unter Umständen ungehindert ausbreiten. Dies kann zum Versagen der Struktur des Bauteils, beispielsweise in Form von Delaminationen, führen.

Ähnliche Probleme können auch bei Nasspress-Verfahren, bei welchem die Langfaserlagen 32 bereits vor der Formgebung mit einer Fasermatrix imprägniert sind, um ein sogenanntes Prepreg zu bilden, und der Prepreg ggf. ohne Vorformprozess 33 und/oder Einpressen des Harzsystems 41 in das Formwerkzeug direkt in Form gepresst werden, auftreten.

Gemäß einem anderen bekannten Verfahren wird bei der Herstellung von Druckbehältern mit einem AI-Liner und CFK-Wicklung (Nasswicklung) der fertige Druckbehälter einem Autofrettage-Prozess unterzogen, um die Lebensdauer des Liners zu erhöhen. In dem Autofrettage-Prozess wird der mit dem Liner versehene Druckbehälter unter einen Überdruck gesetzt, der über dem Betriebsüberdruck und über der Streckgrenze des Liners liegt, was aufgrund der dabei auftretenden (teilweisen) Plastifizierung des Liners und der anschließend bei Ablassen des Druckes aufgebauten Druckeigenspannungen in einer Verfestigung des Linermaterials resultiert. Dabei kann aber in der Matrix eine Vielzahl von Mikrorissen auftreten, die zu einer Reduzierung des Berstdrucks führen können.

Insgesamt neigen Bauteilen aus mehrlagigem Faserverbundmaterial zum Versagen durch Delamination bei Belastung, da sich Risse ungehindert zwischen den (unidirektionalen) Lagen(entlang sog. Reinharzbereiche) ausbreiten können. Um die Sicherheit zu gewährleisten, werden die Bauteile herkömmlicher Weise daher mit großem Sicherheitsfaktor dimensioniert, wodurch ein an sich vorhandenes Leichtbaupotential nicht voll ausgeschöpft werden kann.

Aus der US 5,248,551 A1 ist ein Verfahren zur Herstellung eines Faserverbundbauteils mit zwei Glasfaserschichten bekannt. Die EP 2 246 180 A2 offenbart eine Verstärkungsstruktur mit einer Vlieslage und einem Gewirk aus Polyesterfasern.

Eine Aufgabe der vorliegenden Erfindung besteht darin, ein Verfahren und eine Vorrichtung zur Herstellung eines Faserverbundbauteils sowie ein Faserverbundbauteil zu schaffen, welche die Nachteile des Stands der Technik vermeiden. Insbesondere besteht eine Aufgabe der vorliegenden Erfindung darin, eine Erhöhung der Lebensdauer von CFK-Strukturen oder allgemein Faserverbundstrukturen bei geringerem Bauteilgewicht zu ermöglichen. Eine weitere Aufgabe besteht darin, eine Reduzierung von Delaminationen bei Überbelastung eines Faserverbundbauteils zu erreichen. Eine noch weitere Aufgabe der Erfindung besteht darin, bei Faserverbundbauteilen eine Erhöhung der Risszähigkeit, beispielsweise im Hinblick auf Impakt-Schäden, zu erzielen. Ferner besteht eine Aufgabe der Erfindung darin, eine Möglichkeit der Verwendung von Recyclingmaterial bei der Herstellung von Faserverbundbauteilen zu schaffen und dadurch eine Reduzierung der Materialkosten zu ermöglichen. Schließlich besteht eine Aufgabe der Erfindung darin, eine Reduzierung des Materialaufwandes und dadurch eine höhere Ausschöpfung des Leichtbaupotentials von Faserverbund-, insbesondere CFK-, Strukturen zu ermöglichen.

Die vorstehend genannte/-n Aufgabe/-n wird/werden wenigstens in Teilaspekten gelöst durch ein erfindungsgemäßes Verfahren mit dem Merkmal des Anspruchs 1sowie durch ein Faserverbundbauteil mit den Merkmalen des Anspruchs 10. Dabei gelten Merkmale und Einzelheiten, die im Zusammenhang mit dem erfindungsgemäßen Verfahren beschrieben sind, auch im Zusammenhang mit dem erfindungsgemäßen Faserverbundbauteil und jeweils umgekehrt und wechselweise, sodass bezüglich der Offenbarung zu den einzelnen Erfindungsgesichtspunkten stets wechselseitig Bezug genommen wird bzw. werden kann.

Die Erfindung geht von der Überlegung aus, dass eine Rissbrücke aus einer dünnen Schicht von Kurzfasern, die zwischen zwei Langfaserlagen aufgebracht wird, das gerade Wachstum eines Risses in der Matrix verhindern kann, da der Riss einen energieintensiven Umweg nehmen muss und darüber hinaus die Faser aus der Matrix ziehen muss. Dies führt zu einer Erhöhung der Energie die benötigt wird, damit der Riss wachsen kann (mehr erzeugte Rissoberfläche), der Rissfortschritt wird verlangsamt und dadurch die Lebensdauer bzw. die statische Festigkeit erhöht.

Sinngemäß wird nach einem ersten Gesichtspunkt der vorliegenden Erfindung ein Verfahren zum Herstellen eines Faserverbundbauteils aus wenigstens zwei Langfaserlagen vorgeschlagen, wobei das Verfahren die Schritte aufweist:
a) Bereitstellen einer Langfaserlage;
b) Aufbringen von Kurzfasern auf die Langfaserlage; und
c) Aufbringen einer weiteren Langfaserlage auf die mit den Kurzfasern versehene Langfaserlage.

Dabei sind die Kurzfasern vorzugsweise so ausgebildet und bemessen und werden so aufgebracht, dass eine Ausbreitung von Rissen in einer der Langfaserlagen in die jeweils andere der Langfaserlagen und/oder eine Delamination zwischen den Langfaserlagen erschwert wird. Als Kurzfasern werden dabei insbesondere Fasern einer Länge, die klein gegenüber einer Länge von Langfasern der Langfaserlagen ist, verstanden. Gemäß der Erfindung weisen die Kurzfasern eine Länge von mindestens 0,5 mm auf und sind in der Länge auf höchstens 30 mm, vorzugsweise höchstens 10 mm, insbesondere höchstens 3 mm begrenzt. Vorzugsweise liegt der Großteil der aufgebrachten Kurzfasern im angegebenen Größenbereich. Je nach Art der Herstellung der Kurzfasern, wie nachstehend noch in weiteren Einzelheiten beschrieben, ist es möglich, dass einzelne Kurzfasern den angegebenen Längenbereich überschreiten; dies ist jedoch unschädlich, solange ein hinreichender Anteil der Kurzfasern im angegebenen Längenbereich liegt. Im weiteren Sinne umfasst der Begriff der Kurzfasern jede längliche Struktur, wie etwa sehr kurze Fasern bis in den Bereich von Mikrometern oder auch Nanotubes oder geschnittene Nanotubes, soweit sie die oben beschriebene Wirkung zeigen. In den angegebenen Größenbereichen kann je nach Anordnung und Füllgrad der Langfasern in den Langfaserlagen eine optimale Verspreizung derart, dass die Kurzfasern als Rissbremse, aber nicht als Kerbstelle wirken, erzielt werden, sodass eine Optimierung des Mehrgewichts durch die Kurzfasern gegenüber dem dadurch erreichten Festigkeitsgewinn vorgenommen werden kann. Weitere Verfahrensschritte, wie etwa eine Imprägnierung, ein Vorformen, Pressen, Aushärten und Entformen, entsprechen den Verfahrensschritten bekannter Verfahren.

Die Anwendung des erfindungsgemäßen Verfahrens ist nicht auf zwei Langfaserlagen beschränkt, sondern kann auf eine beliebige Anzahl von Langfaserlagen mit jeweils einer Lage Kurzfasern dazwischen ausgeweitet werden, wenn die vorstehend beschriebenen Schritte b) und c) mehrmals im Wechsel ausgeführt werden. Es versteht sich, dass die in einem Schritt c) aufgebrachte weitere Langfaserlage bei einer Wiederholung des Schrittes b) die dort genannte Langfaserlage ist, auf welcher dann weitere Kurzfasern aufgebracht werden.

Eine besonders gute Verzahnung der Langfaserlagen kann erreicht werden, wenn die Kurzfasern in dem vorstehend beschriebenen Schritt b) so aufgebracht werden, dass die Kurzfasern wenigstens teilweise in die Langfaserlage eindringen, und wobei die weitere Langfaserlage in Schritt c) so aufgebracht wird, dass die Kurzfasern wenigstens teilweise in die weitere Langfaserlage eindringen. So kann eine Trennung der Langfaserlagen wirksam verhindert werden. Bei wiederholter Ausführung der Schritte b) und c) versteht sich wiederum, dass die Langfaserlage bei erstmaliger Ausführung des Schritts b) die in Schritt a) bereitgestellte Langfaserlage ist, bei einer wiederholten Ausführung des Schritts b) jedoch die in einer vorherigen Ausführung des Schritts c) aufgebrachte weitere Langfaserlage ist.

In einer bevorzugten Weiterbildung des erfindungsgemäßen Verfahrens werden die Kurzfasern in Schritt b) so aufgebracht, dass die Kurzfasern eine wenigstens im Wesentlichen zufällige Orientierung aufweisen. Dies kann insbesondere bedeuten, dass die Kurzfasern gezielt randomisiert aufgebracht werden. Aufgrund der randomisierten Orientierung kann sich keine bevorzugte Rissausbreitungsrichtung einstellen. Mit anderen Worten, der Riss muss sich immer einen neuen Weg suchen, was die benötigte Energie für das Wachstum des Risses weiter erhöht, daher den Rissfortschritt weiter verlangsamt und die Lebensdauer und statische Festigkeit des Bauteils weiter erhöht.

In einer bevorzugten Ausführungsform des erfindungsgemäßen Verfahrens werden die Kurzfasern durch Zuschneiden eines Faserstrangs und/oder durch Verarbeiten, insbesondere Zerkleinern, vorzugsweise Mahlen oder Häckseln, von Recyclingmaterial, insbesondere von Produktionsausschüssen, hergestellt. Unter einem Faserstrang wird insbesondere ein sogenannter Roving verstanden, der in dem Verfahren kontinuierlich zugeführt werden kann. Die Verwendung eines Faserstrangs weist Vorteile hinsichtlich der Lagerung und Handhabung, insbesondere Zuführung auf, insbesondere kann die Herstellung der Kurzfasern unmittelbar und kontinuierlich vor der Verwendung erfolgen. Die Verwendung eines Rezyklats, die auch mit der Verwendung von Fasersträngen kombiniert werden kann, kann die Wiederverwendung von Altstoffen ermöglichen. Dadurch können eine Einsparung an Rohstoffen und eine Prozessoptimierung erzielt sowie gegebenenfalls gesetzliche Vorgaben erfüllt werden. Gesetzliche Vorgaben können beispielsweise die zwingende Einhaltung eines bestimmten Recycling-Anteils bei der Verwendung von Kunststoffen betreffen. Dies kann auch insbesondere die Geräte- und Fahrzeugindustrie betreffen, die zur Rücknahme von Altprodukten verpflichtet sein können. Damit kann das erfindungsgemäße Verfahren auch einen Beitrag zur Wiederverwendung zurückgenommener Produkte und zur Verringerung der Abfallmenge leisten.

In einer alternativ bevorzugten Ausführungsform des erfindungsgemäßen Verfahrens werden die Kurzfasern aufgespritzt, vorzugsweise zusammen mit einem Bindemittel. Dadurch können das Aufbringen und das Imprägnieren der Kurzfasern in einem einzigen Verfahrensschritt kombiniert werden. Alternativ können die Kurzfasern auch aufgestreut werden. Gemäß der Erfindung werden die Kurzfasern als textile Fläche (z.B. Vlies oder Gelege) auf die Langfaserlage aufgebracht. Dies ermöglicht eine besonders einfache Zuführung und Aufbringung, die auch den Herstellungstakt beschleunigen kann. Des Weiteren ist es möglich, ein Vlies oder Gelege vorab zuzuschneiden, was die Herstellung des Faserverbundbauteils weiter beschleunigen kann.

Obschon vorstehend einige Ausführungsformen als Alternativen genannt wurden, steht es dem Erfindungsgedanken nicht entgegen, diese Ausführungsformen gegebenenfalls auch zu kombinieren.

In einer bevorzugten Weiterbildung des erfindungsgemäßen Verfahrens werden die Kurzfasern vor dem Aufbringen mit einem Bindemittel imprägniert. Die Imprägnierung kann wenigstens teilweise auch während des Aufbringens der Kurzfasern erfolgen, was beispielsweise durch Besprühen erfolgen kann. Bei Verwendung von textilen Halbzeugen und Rovings kann die Imprägnierung auch beispielsweise nach einer Spreizung der Einzelfilamente des Rovings erfolgen. Die Imprägnierung der Kurzfasern kann ein Anhaften der Langfaserlagen in dem Faserhalbzeug (der Preform) verbessern, was die Handhabung weiter erleichtern kann.

Obschon die Langfaserlagen grundsätzlich auch als Trockenhalbzeug bereitgestellt werden können, ist es in einer bevorzugten Weiterbildung des erfindungsgemäßen Verfahrens auch möglich, die Langfaserlagen mit einem Bindemittel zu imprägnieren. Dadurch kann eine Preform hergestellt werden, die durch die Wirkung des Bindemittels eine Formstabilität für weitere Verarbeitungsschritte aufweist. Dabei kann vorzugsweise nach Aufbringen aller Langfaserlagen ein durch die Langfaserlagen mit jeweils dazwischen angeordneten Kurzfasern gebildeter Lagenstapel in einer Form gepresst werden.

Die Materialabstimmung mit den Langfaserlagen und der Matrix bzw. einer eventuellen Faserschlichte ist dann besonders vorteilhaft, wenn die Kurzfasern aus dem gleichen Material wie demjenigen der Langfaserlagen hergestellt sind. Dabei können sich auch Synergien bei der Prozessführung (Imprägnierung, Matrix etc.) von Langfasern und Kurzfasern ergeben.

Das Verfahren eignet sich besonders für Bauteile aus kohlenstoffverstärktem Kunststoff. Das heißt, dass die Kurzfasern und/oder die Langfaserlagen in einer bevorzugten Weiterbildung des erfindungsgemäßen Verfahrens wenigstens im Wesentlichen aus Kohlenstoff hergestellt sind. Es sind jedoch auch andere Faser-Matrix-Verbünde sowie Faserkeramiken durch das erfindungsgemäße Verfahren vorteilhaft beeinflussbar.

Das Verfahren zeigt seine Vorteile besonders dann, wenn die Langfaserlagen unidirektionale Langfaserlagen sind. Bei Faserverbundbauteilen aus UD-Faserlagen ist das Problem der Delaminierung und Rissfortschreitung besonders virulent. Grundsätzlich ist das Verfahren aber auch bei der Verwendung MD-Lagen anwendbar und es ist eine solche Anwendung von der Erfindung umfasst.

Gemäß einem weiteren Gesichtspunkt der vorliegenden Erfindung wird ein Faserverbundbauteil mit einer Schichtanordnung aus wenigstens zwei Langfaserlagen vorgeschlagen, bei welchen die Schichtanordnung eine Beimengung von Kurzfasern aus insbesondere dem gleichen Material wie demjenigen der Langfasern aufweist, wobei die Kurzfasern bevorzugt in einem Übergangsbereich zwischen jeweils zwei Langfaserlagen angeordnet sind und vorzugsweise so ausgebildet, bemessen und angeordnet sind, dass eine Ausbreitung von Rissen in einer der Langfaserlagen in eine jeweils benachbarte Langfaserlage erschwert wird. Als ein Bauteil im Sinne der Erfindung wird sowohl ein Fertigbauteil als auch ein Zwischenprodukt oder ein Halbzeug verstanden. Das Faserverbundbauteil weist insbesondere UD-Lagen auf, die vorzugsweise aus Kohlenstoff-Langfasern bestehen. Das gemäß diesem Gesichtspunkt ausgebildete Faserverbundbauteil weist die vorstehend im Hinblick auf das erfindungsgemäße Verfahren beschriebenen Vorteile und Wirkungen auf.

In einer bevorzugten Weiterbildung des erfindungsgemäßen Faserverbundbauteils dringen die Kurzfasern wenigstens teilweise in eine oder beide von zwei benachbarten Langfaserlagen ein. In einer weiteren Weiterbildung des erfindungsgemäßen Faserverbundbauteils weisen die Kurzfasern eine wenigstens im Wesentlichen zufällige Orientierung auf.

Weitere Merkmale, Aufgaben und Wirkungen der Erfindung ergeben sich aus der Beschreibung und den beigefügten Zeichnungen.

In den Zeichnungen zeigt bzw. zeigen:
- Fig. 1: eine Vorrichtung zur Herstellung eines Faserverbundbauteils sowie damit ausgeführte Verfahrensschritte als jeweilige Ausführungsbeispiele der vorliegenden Erfindung,
- Fig. 2: eine Schichtanordnung eines Faserverbundbauteils als ein weitere Ausführungsbeispiel der vorliegenden Erfindung,
- Fig. 3: eine Kurzfaserbeschickungsvorrichtung in einer Ausführungsvariante des in Fig. 1 gezeigten Ausführungsbeispiels,
- Fig. 4: eine Kurzfaserbeschickungsvorrichtung in einer weiteren Ausführungsvariante,
- Fig. 5: die Kurzfaserbeschickungsvorrichtung von Fig. 4 in einer anderen Ansicht, und
- Fig. 6: eine Laminierstation als eine Vorrichtung zum Herstellen eines Faserverbundbauteils sowie damit ausgeführte Verfahrensschritte nach dem Stand der Technik.

Es versteht sich, dass die Darstellungen in den Zeichnungen rein schematisch zu verstehen sind und Ihnen keine Einschränkungen im Hinblick auf konkrete Abmessungen oder Größenverhältnisse entnommen werden sollen, es sei denn, dies wäre nachstehend ausdrücklich so beschrieben.

Nachstehend werden Ausführungsbeispiele der Erfindung anhand der beigefügten Zeichnungen beschrieben. Dabei sind gleiche Bauteile in mehreren Figuren jeweils mit den gleichen Bezugszeichen versehen. Bauelemente und Merkmale, Zwecke und Wirkungen, die in Bezug auf ein Ausführungsbeispiel beschrieben werden, sind, soweit nicht ausdrücklich oder ersichtlich ausgeschlossen, als in jedem anderen Ausführungsbeispiel anwendbar anzunehmen und sollen auch in Bezug auf das jeweils andere Ausführungsbeispiel als offenbart gelten, auch wenn sie dort nicht ausdrücklich gezeigt und/oder beschrieben werden.

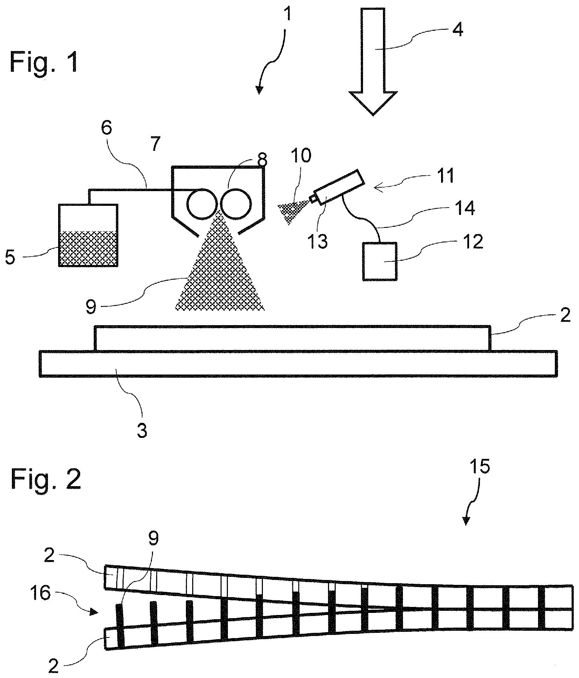

Fig. 1 zeigt eine schematische Darstellung einer Vorrichtung 1 zum Herstellen eines Faserverbundbauteils als ein erstes Ausführungsbeispiel der vorliegenden Erfindung. In Fig. 1 sind auch die Verfahrensschritte eines mit der Vorrichtung 1 ausgeführten Verfahrens, welches ein weiteres Ausführungsbeispiel der vorliegenden Erfindung ist, schematisch dargestellt.

Gemäß der Darstellung in Fig. 1 ist die Vorrichtung 1 in einem Zustand gezeigt, in welchem eine Langfaserlage 2 auf einer Unterlage 3 angeordnet ist. Ein Pfeil 4 symbolisiert eine Handhabungs- und Aufbringungsvorrichtung für weitere Langfaserlagen 2. Ein Rovingspeicher 5 enthält einen Roving (d. h. einen Faserstrang) 6, der durch nicht näher dargestellte Mittel einer Kurzfaserbeschickungsvorrichtung 7 zugeführt wird. Die Kurzfaserbeschickungsvorrichtung 7 weist ein Schnetzelwerk 8 auf, durch welches der Roving 6 geführt wird. In dem Schnetzelwerk 8 wird der Roving 6 bzw. dessen Einzelfilamente, die durch nicht näher dargestellte, der Kurzfaserbeschickungsvorrichtung 7 vorangehende Mittel aufgespreizt werden können, zu Kurzfasern 9 einer vorbestimmten Länge geschnitten. Aus der Kurzfaserbeschickungsvorrichtung 7 fallen die Kurzfasern 9 frei auf die Langfaserlage 2. Zu diesem Zweck kann die Kurzfaserbeschickungsvorrichtung 7 über der Fläche der Langfaserlage 2 verfahrbar sein, oder die Kurzfasern 9 werden durch eine nicht näher dargestellte Vorrichtung über der Langfaserlage 2 verteilt, z.B. verblasen. Während des Aufbringens auf die Langfaserlage 2 werden die Kurzfasern 9 mit einem Bindemittel 10 versehen. Das Bindemittel 10 wird durch eine Sprühvorrichtung 11 in den Strom der Kurzfasern 9 gesprüht. Genauer gesagt wird das Bindemittel 10 aus einem Bindemitteltank 12 über eine Leitung 14 einer Düse 13 zugeführt, welche das Bindemittel 10 versprüht.

Die Kurzfasern 9 werden in dem Schnetzelwerk 8 auf eine Länge von beispielsweise 3 mm geschnitten. Dieser Wert kann jedoch an die Erfordernisse des Matrixsystems, die Anordnung der Langfasern in der Langfaserlage 2 und andere Prozess- und Auslegungsbedingungen angepasst werden. Es hat sich ein Längenbereich in der Größenordnung von 3 mm bis 10 mm, gegebenenfalls auch bis zu 30 mm, als praktikabel bzw. vorteilhaft herausgestellt.

Nach den vorstehend beschriebenen Verfahrensschritten wird mittels der Handhabungs- und Aufbringungsvorrichtung 4 eine weitere Langfaserlage (2, in der Figur nicht näher dargestellt) auf die mit den Kurzfasern 9 versehene Langfaserlage 2 aufgebracht und ggf. angepresst. Das Aufbringen der Kurzfasern 9 und Aufbringen weiterer Langfaserlagen 2 im Wechsel kann beliebig oft wiederholt werden, bis eine gewünschte Stapeldicke erreicht ist. Danach werden an sich bekannte Verfahrensschritte wie ein Vorformen, Pressen, Imprägnieren bzw. Injizieren eines Harzsystems, Aushärten und Entformen durch nicht näher dargestellte Mittel ausgeführt, um das Bauteil fertigzustellen.

Fig. 2 zeigt eine schematische Darstellung einer Schichtanordnung 15, die durch das vorstehend beschriebene Verfahren hergestellt werden kann, und die ein weiteres Ausführungsbeispiel der vorliegenden Erfindung bildet. Ohne Beschränkung der Allgemeinheit weist die Schichtanordnung 15 zwei Langfaserlagen 2 auf. Zwischen den Langfaserlagen 2 befindet sich eine Beimengung (oder Zwischenlage) 16 aus Kurzfasern 9, welche sowohl in die obere Langfaserlage 2 als auch in die untere Langfaserlage 2 eindringen. In der dargestellten Situation sind die Langfaserlagen 2 am in der Figur linken Ende gespreizt und sind die Kurzfasern 9 der Zwischenlage 16 aus der oberen Langfaserlage 2 teilweise herausgezogen. Mit anderen Worten, in Fig. 2 ist ein beginnender Delaminationsvorgang schematisch dargestellt. Wie in Fig. 2 ersichtlich, bilden die in den Langfaserlagen 2 noch verbliebenen Kurzfasern 9 eine Rissbrücke, welche ein weiteres Fortschreiten der Delamination erschwert.

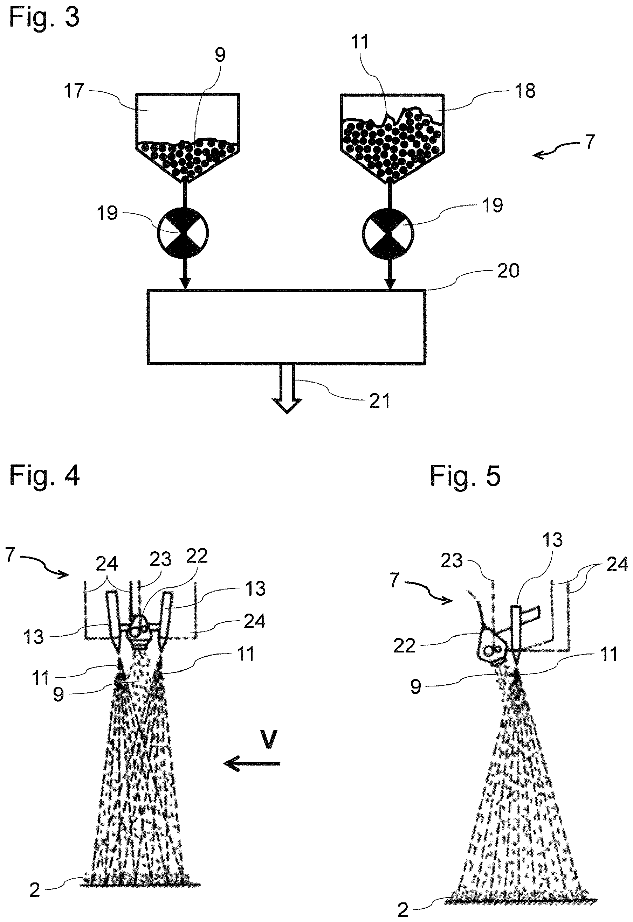

Fig. 3 zeigt eine schematische Darstellung einer Kurzfaserbeschickungsvorrichtung 7, die in der Vorrichtung 1 anstelle der in Fig. 1 gezeigten Kurzfaserbeschickungsvorrichtung 7 verwendet werden kann. Die Kurzfaserbeschickungsvorrichtung 7 gemäß Fig. 3 weist einen Kurzfaserbehälter 17 und einen Bindemittelbehälter 18 auf. Der Kurzfaserbehälter 17 enthält einen Vorrat an Kurzfasern 9, während der Bindemittelbehälter 18 einen Vorrat eine Bindemittels 10 enthält, das in dieser Ausführungsvariante als ein Granulat vorliegt. Die Kurzfaserbeschickungsvorrichtung 7 weist ferner zwei Förderer 19 auf, welche Kurzfasern 9 aus dem Kurzfaserbehälter 17 und Bindemittelgranulat 10 aus dem Bindemittelbehälter 18 gemäß einer Regelung durch eine nicht näher dargestellte Regelungstechnik einem Mahlwerk 20 zuführen. Das Mahlwerk 20 mahlt und vermengt das Granulat des Bindemittels 10 mit den Kurzfasern 9 und liefert ein Kurzfasermaterial 21, welches als Materialstrom auf die hier nicht näher dargestellte Langfaserlage aufgebracht werden kann.

Fig. 4 zeigt eine weitere Kurzfaserbeschickungsvorrichtung 7 als eine Ausführungsvariante der in Fig. 1 gezeigten Kurzfaserbeschickungsvorrichtung 7 der Vorrichtung 1 zur Herstellung eines Faserverbundbauteils. Fig. 5 zeigt die in Fig. 4 dargestellte Kurzfaserbeschickungsvorrichtung 7 aus Richtung eines Pfeils V in Fig. 4. Die Kurzfaserbeschickungsvorrichtung 7 dieser Ausführungsform weist eine Faserspritzeinheit 22 sowie zwei Düsen 13 auf. Die Faserspritzeinheit 22 wird über eine Faserzuführung 23 mit Kurzfasern 9 sowie über eine Druckluftleitung 24 mit Druckluft versorgt. Über die Druckluft, die über die Druckluftleitung 24 zugeführt wird, werden die über die Faserzuführung 23 zugeführten Kurzfasern 9 ausgeblasen. Die Düsen 13 erhalten über eine nicht näher dargestellte Zuführung ein Bindemittel 10 und werden über weitere Druckluftleitungen 24 mit Druckluft versorgt. Die Düsen 13 sind in den Strom der Kurzfasern 9 gerichtet und sprühen das Bindemittel 10 mittels der zugeführten Druckluft in den Strom der Kurzfasern 9, der von der Faserspritzeinheit 22 abgegeben wird. Das Bindemittel 10 vermengt sich mit dem Strom der Kurzfasern 9, und das Gemisch aus Kurzfasern 9 und Bindemittel 10 trifft somit auf die Langfaserlage 2. Die Faserspritzeinheit 22 und die Düsen 13 werden beispielsweise durch einen nicht näher dargestellten Industrieroboter geführt und so das Fasermaterial auf das Halbzeug aufgebracht.

Die Erfindung wurde vorstehend anhand bevorzugter Ausführungsbeispiele, - varianten, -alternativen und Abwandlungen beschrieben und in den Figuren veranschaulicht. Diese Beschreibungen und Darstellungen sind rein schematisch und schränken den Schutzumfang der Ansprüche nicht ein, sondern dienen nur deren beispielhafter Veranschaulichung. Es versteht sich, dass die Erfindung auf vielfältige Weise ausgeführt und abgewandelt werden kann, ohne den Schutzumfang der Patentansprüche zu verlassen.

### Bezugszeichenliste

- 1: Vorrichtung
- 2: Langfaserlage
- 3: Unterlage
- 4: Handhabungs- und Aufbringungsvorrichtung
- 5: Rovingspeicher
- 6: Roving
- 7: Kurzfaserbeschickungsvorrichtung
- 8: Schnetzelwerk
- 9: Kurzfasern
- 10: Bindemittel
- 11: Sprühvorrichtung
- 12: Bindemitteltank
- 13: Düse
- 14: Leitung
- 15: Schichtanordnung
- 16: Übergangsbereich (Zwischenlage)
- 17: Kurzfaserbehälter
- 18: Bindemittelbehälter
- 19: Förderer
- 20: Mahlwerk
- 21: Kurzfasermaterial
- 22: Faserspritzeinheit
- 23: Faserzuführung
- 24: Druckluftleitung

- 31: Laminierstation
- 32: Langfaserlagen
- 33: Vorformen
- 34: Preform
- 35: Einlegen
- 36: Werkzeug
- 37: Unterteil
- 38: Oberteil
- 39: Pressen
- 40: Injektor
- 41: Harzsystem
- 42: Entformen
- 43: Bauteil

## Patentansprüche

1. Verfahren zum Herstellen eines Faserverbundbauteils aus wenigstens zwei Langfaserlagen (2), wobei das Verfahren die folgenden Verfahrensschritte aufweist:
a) Bereitstellen einer Langfaserlage (2);
b) Aufbringen von Kurzfasern (9) auf die Langfaserlage (2); und
c) Aufbringen einer weiteren Langfaserlage (2) auf die mit den Kurzfasern (9) versehene Langfaserlage (2),
wobei die Kurzfasern (9) eine Länge aufweisen, die gegenüber einer Länge der Langfasern der Langfaserlagen (2) klein ist, wobei ein Großteil der Kurzfasern (9) eine Länge zwischen 0,5 mm und 30 mm aufweist, und wobei die Kurzfasern (9) als eine textile Fläche, nämlich als ein Vlies oder Gelege, auf die Langfaserlage (2) aufgebracht werden, wobei die Kurzfasern (9) in Schritt b) so aufgebracht werden, dass die Kurzfasern (9) wenigstens teilweise in die Langfaserlage (2) eindringen, und wobei die weitere Langfaserlage (2) in Schritt c) so aufgebracht wird, dass die Kurzfasern (9) wenigstens teilweise in die weitere Langfaserlage (2) eindringen.

2. Verfahren nach Anspruch 1, **dadurch gekennzeichnet, dass** die Schritte b) und c) mehrmals im Wechsel ausgeführt werden.

3. Verfahren nach Anspruch 1 oder 2, **dadurch gekennzeichnet, dass** die Kurzfasern (9) in Schritt b) so aufgebracht werden, dass die Kurzfasern (9) eine zufällige Orientierung oder eine wenigstens im Wesentlichen zufällige Orientierung aufweisen.

4. Verfahren nach einem der vorstehenden Ansprüche, **dadurch gekennzeichnet, dass** die Kurzfasern (9) durch Zuschneiden eines Faserstrangs (6) und/oder durch Zerkleinern hergestellt werden.

5. Verfahren nach einem der vorstehenden Ansprüche, **dadurch gekennzeichnet, dass** die Kurzfasern (9) vor dem Aufbringen mit einem Bindemittel (10) imprägniert werden.

6. Verfahren nach einem der vorstehenden Ansprüche, **dadurch gekennzeichnet, dass** die Langfaserlagen (2) mit einem Bindemittel (10) imprägniert werden, wobei nach Aufbringen aller Langfaserlagen (2) ein durch die Langfaserlagen (2) mit jeweils dazwischen angeordneten Kurzfasern (9) gebildeter Lagenstapel in einer Form gepresst wird.

7. Verfahren nach einem der vorstehenden Ansprüche, **dadurch gekennzeichnet, dass** die Kurzfasern (9) aus dem gleichen Material hergestellt sind wie die Langfaserlagen (2).

8. Verfahren nach einem der vorstehenden Ansprüche, **dadurch gekennzeichnet, dass** die Kurzfasern (9) und/oder die Langfaserlagen (2) aus Kohlenstoff oder wenigstens im Wesentlichen aus Kohlenstoff hergestellt sind.

9. Verfahren nach einem der vorstehenden Ansprüche, **dadurch gekennzeichnet, dass** die Langfaserlagen (2) unidirektionale Langfaserlagen sind.

10. Faserverbundbauteil mit einer Schichtanordnung (15) aus wenigstens zwei Langfaserlagen (2), insbesondere UD-Lagen, vorzugsweise aus Kohlenstoff-Langfasern, wobei die Schichtanordnung (15) eine Beimengung (16) von Kurzfasern (9) aus dem gleichen Material wie demjenigen der Langfaserlagen (2) aufweist, wobei die Kurzfasern (9) in einem Übergangsbereich zwischen jeweils zwei Langfaserlagen (2) angeordnet sind und eine Länge aufweisen, die gegenüber einer Länge der Langfasern der Langfaserlagen (2) klein ist, wobei ein Großteil der Kurzfasern (9) eine Länge zwischen 0,5 mm und 30 mm aufweist, **dadurch gekennzeichnet, dass** die Kurzfasern (9) als eine textile Fläche, nämlich als ein Vlies oder Gelege, zwischen den Langfaserlage (2) angeordnet sind und die Kurzfasern (9) wenigstens teilweise in eine oder beide von zwei benachbarten Langfaserlagen (2) eindringen.

11. Faserverbundbauteil nach Anspruch 10, **dadurch gekennzeichnet, dass** die Kurzfasern (9) eine zufällige Orientierung oder eine wenigstens im Wesentlichen zufällige Orientierung aufweisen.

## Claims

1. A method for producing a fibre composite component made of at least two long-fibre plies (2), wherein the method has the following method steps:
a) making available a long-fibre ply (2);
b) applying short fibres (9) to the long-fibre ply (2); and
c) applying a further long-fibre ply (2) to the long-fibre ply (2) which is provided with the short fibres (9),
wherein the short fibres (9) have a length which is small compared with a length of the long fibres of the long-fibre plies (2), wherein a major part of the short fibres (9) have a length of between 0.5 mm and 30 mm, and wherein the short fibres (9) are applied to the long-fibre ply (2) as a textile sheet, namely as a non-woven fabric or laid fabric, wherein the short fibres (9) in step b) are applied such that the short fibres (9) penetrate at least partially into the long-fibre ply (2), and wherein the further long-fibre ply (2) in step c) is applied such that the short fibres (9) penetrate at least partially into the further long-fibre ply (2).

2. A method according to Claim 1, **characterised in that** steps b) and c) are carried out several times in alternation.

3. A method according to Claim 1 or Claim 2, **characterised in that** the short fibres (9) in step b) are applied such that the short fibres (9) have a random orientation or an at least substantially random orientation.

4. A method according to one of the preceding claims, **characterised in that** the short fibres (9) are produced by cutting a fibre strand (6) to size and/or by comminuting.

5. A method according to one of the preceding claims, **characterised in that** the short fibres (9) are impregnated with a binder (10) prior to the application.

6. A method according to one of the preceding claims, **characterised in that** the long-fibre plies (2) are impregnated with a binder (10), wherein after application of all the long-fibre plies (2) a stack of plies formed by the long-fibre plies (2) with short fibres (9) arranged therebetween in each case is pressed in a mould.

7. A method according to one of the preceding claims, **characterised in that** the short fibres (9) are produced from the same material as the long-fibre plies (2).

8. A method according to one of the preceding claims, **characterised in that** the short fibres (9) and/or the long-fibre plies (2) are produced from carbon or at least substantially from carbon.

9. A method according to one of the preceding claims, **characterised in that** the long-fibre plies (2) are unidirectional long-fibre plies.

10. A fibre composite component with a layer arrangement (15) made of at least two long-fibre plies (2), especially unidirectional plies, preferably made of carbon long fibres, wherein the layer arrangement (15) has an addition (16) of short fibres (9) made of the same material as that of the long-fibre plies (2), wherein the short fibres (9) are arranged in a transition region between two long-fibre plies (2) in each case and have a length which is small compared with a length of the long fibres of the long-fibre plies (2), wherein a major part of the short fibres (9) have a length of between 0.5 mm and 30 mm, **characterised in that** the short fibres (9) are arranged as a textile sheet, namely as a non-woven fabric or laid fabric, between the long-fibre ply (2) and the short fibres (9) penetrate at least partially into one or both of two adjacent long-fibre plies (2).

11. A fibre composite component according to Claim 10, **characterised in that** the short fibres (9) have a random orientation or an at least substantially random orientation.

## Revendications

1. Procédé d'obtention d'un élément composite à base de fibres à partir d'au moins deux couches de fibres longues (2), ce procédé comprenant les étapes suivantes consistant à :
a) se procurer une couche de fibres longues (2),
b) appliquer des fibres courtes (9) sur la couche de fibres longues (2), et
c) appliquer une autre couche de fibres longues (2) sur la couche de fibres longues (2) équipée des fibres courtes (9),
les fibres courtes (9) ayant une longueur qui est faible par rapport à la longueur des fibres longues des couches de fibres longues (2), une grande proportion des fibres courtes (9) ayant une longueur comprise entre 0,5 mm et 30 mm, et les fibres courtes (9) étant appliquées sous la forme d'une surface textile, à savoir une nappe ou un non tissé sur la couche de fibres longues (2), lors de l'étape b) les fibres courtes (9) étant appliquées de sorte qu'elles pénètrent au moins partiellement dans la couche de fibres longues (2), et lors de l'étape c) l'autre couche de fibres longues (2) étant appliquée de sorte que les fibres courtes (9) pénètrent au moins partiellement dans celle-ci.

2. Procédé conforme à la revendication 1,
**caractérisé en ce que**
les étapes b) et c) sont mises en oeuvre alternativement plusieurs fois.

3. Procédé conforme à la revendication 1 ou 2,
**caractérisé en ce que**
lors de l'étape b) les fibres courtes (9) sont appliquées de sorte qu'elles aient une orientation aléatoire ou une orientation au moins essentiellement aléatoire.

4. Procédé conforme à l'une des revendications précédentes,
**caractérisé en ce que**
les fibres courtes (9) sont obtenues par découpe d'un cordon de fibre (6) et/ou par découpe en petits morceaux.

5. Procédé conforme à l'une des revendications précédentes,
**caractérisé en ce que**
les fibres courtes (9) sont imprégnées d'un liant (10) avant leur application.

6. Procédé conforme à l'une des revendications précédentes,
**caractérisé en ce que**
les couches de fibres longues (2) sont imprégnées avec un liant (10), et après application de toutes les couches de fibres longues (2), une pile de couches formée par les couches de fibres longues (2) entre lesquelles sont incorporées les fibres courtes (9) est comprimée dans un moule.

7. Procédé conforme à l'une des revendications précédentes,
**caractérisé en ce que**
les fibres courtes (9) sont réalisées dans le même matériau que les couches de fibres longues (2).

8. Procédé conforme à l'une des revendications précédentes,
**caractérisé en ce que**
les fibres courtes (9) et/ou les couches de fibres longues (2) sont réalisées en carbone ou au moins essentiellement en carbone.

9. Procédé conforme à l'une des revendications précédentes,
**caractérisé en ce que**
les couches de fibres longues (2) sont des couches de fibres longues unidirectionnelles.

10. Elément composite à base de fibres ayant un agencement de couches (15) constitué d'au moins deux couches de fibres longues (2), en particulier de couches unidirectionnelles, de préférence constituées de fibres longues en carbone, l'agencement de couches (15) comprenant l'addition (16) de fibres courtes (9) réalisées dans le même matériau que les couches de fibres longues (2), les fibres courtes (9) étant situées dans une zone de transition entre deux couches de fibres longues respectives et ayant une longueur qui est faible par rapport à la longueur des fibres longues des couches de fibres longues (2), une grande proportion des fibres courtes (9) ayant une longueur comprise entre 0,5 mm et 30 mm,
**caractérisé en ce que**
les fibres courtes (9) sont situées sous la forme d'une surface textile, à savoir d'une nappe ou d'un non-tissé entre les couches de fibres longues (2), et pénètrent au moins partiellement dans une ou dans les deux couches de fibres longues voisines (2).

11. Elément composite à base de fibres conforme à la revendication 10,
**caractérisé en ce que**
les fibres courtes (9) ont une orientation aléatoire ou une orientation essentiellement aléatoire.
